Europäisches Patentamt

European Patent Office

Office européen des brevets

(19)

(11) Veröffentlichungsnummer: **0 254 264**
**B1**

(12) **EUROPÄISCHE PATENTSCHRIFT**

(45) Veröffentlichungstag der Patentschrift:
31.10.90

(21) Anmeldenummer: 87110528.4

(22) Anmeldetag: 21.07.87

(51) Int. Cl.⁵: **F42B 5/30,** B29C 55/26,
C08L 23/06

(54) Verfahren zur Verminderung der Reibungskräfte bei der Herstellung von Kartuschenrohren.

(30) Priorität: 25.07.86 DE 3625258

(43) Veröffentlichungstag der Anmeldung:
27.01.88 Patentblatt 88/4

(45) Bekanntmachung des Hinweises auf die Patenterteilung:
31.10.90 Patentblatt 90/44

(84) Benannte Vertragsstaaten:
DE ES FR IT

(56) Entgegenhaltungen:
CA-A- 860 034
DE-A- 2 546 237
US-A- 3 108 981
US-A- 4 565 131

(73) Patentinhaber: HOECHST AKTIENGESELLSCHAFT,
Postfach 80 03 20, D-6230 Frankfurt am Main 80(DE)

(72) Erfinder: Gebler, Horst, Dr., Wingertstrasse 5,
D-6070 Langen(DE)
Erfinder: Pfahler, Gerhard, Dr., Karlsbader Strasse 27,
D-8900 Augsburg(DE)
Erfinder: Schindler, Arnold, Dr., Völklinger Weg 44,
D-6000 Frankfurt am Main(DE)

ACTORUM AG

**Beschreibung**

Es ist seit langem bekannt, daß man durch Recken bzw. Verstrecken von Rohren aus Polyolefinen, beispielsweise HD-Polyethylen, Rohre erhalten kann, deren Festigkeitseigenschaften durch den unter bzw. nahe dem Kristallitschmelzpunkt erfolgenden Orientierungsprozeß eine mehr oder weniger ausgeprägte Verbesserung erlangen (vgl. DE 1 108 420 und DE 1 125 144).

Zur Herstellung von Kartuschenrohren aus HD-Polyethylen, welche zu Hülsen für Schrotpatronen verarbeitet werden, werden Röhrchen (Ø 15 bis 25 mm) mit großer Wandstärke (ca. 1 bis 7 mm) zunächst bei einer Temperatur knapp unter dem Kristallitschmelzpunkt aus einer Einschnürzone mit einem Streckverhältnis von mehr als 1:5 (ca. 1:5 bis 1:8) längsgestreckt und unmittelbar anschließend durch einen entsprechenden Innendruck um das Verhältnis 1:1, 2 bis 1:1, 8 quergereckt. Dabei bildet sich eine Kalotte aus, die sich an eine gekühlte Kalibrierhülse anlegt und dabei verfestigt. Innerhalb der Kalibrierhülse, bevor sich das Rohr verfestigt, wird dessen Oberfläche mit einer Riffelung versehen, welche das einwandfreie Auswerfen der abgeschossenen Schrotpatronenhülse erleichtert.

Es hat sich gezeigt, daß so große Bremskräfte im Bereich der Kalibrierhülse auftreten, daß der Verfestigungsprozeß instabil wird und das Rohr abreißen kann.

Bekannt ist eine Polyethylenmasse, welche zur Herstellung transparenter Filme vorgesehen ist und neben hochmolekularem Polyethylen ein Gleitmittel und ein plastifizierendes Mittel enthält (vgl. DE 25 46 237). Die vorgesehenen Mengen dieser Zusatzstoffe sind jedoch zu hoch, um aus der Formmasse noch einwandfreie Rohre herstellen zu können.

Weiterhin ist eine Kunststoff-Kartusche bekannt und ein Verfahren zu ihrer Herstellung, bei welchem vorgefertigte Becher durch Pressen durch Kalibrierdüsen in die Endform gebracht werden (vgl. CA 860 034). Die Düsen werden geschmiert, um die Reibungswärme in Grenzen zu halten.

Schließlich ist eine Geschoßhülse für Gewehre bekannt, deren Hülsenboden aus einem Polyethylen-Polycarbonat-Blend besteht, welcher ein Polytetrafluorethylen in bedeutender Menge enthält (vgl. US 4 565 131).

Es wurde nun gefunden, daß man Kartuschenrohre auch bei hohen Produktionsgeschwindigkeiten störungsfrei herstellen kann, wenn man eine HD-Polyethylen-Formmasse einsetzt, welche ein bestimmtes Gleitmittel enthält.

Die Erfindung betrifft somit das in den Ansprüchen beschriebene Verfahren.

Die für das erfindungsgemäße Verfahren zu verwendende HD-Polyethylen-Formmasse enthält als Hauptbestandteil ein HD-Polyethylen mit einer Dichte von 0,941 bis 0,945 g/cm³, einer Viskositätszahl von ca. 310 ml/g und einem Schmelzindex MFI 190/5 von 0,3 bis 0,45 g/10 min und MFI 190/21, 6 von 12 bis 18 g/10 min. Das Polyethylen enthält die üblichen Stabilisatoren.

Die zu verwendende HD-Polyethylen-Formmasse enthält erfindungsgemäß außerdem ein Gleitmittel. Dieses Gleitmittel sollte polar sein, um die Grenzflächeneigenschaften des HD-Polyethylens gegenüber dem Werkstoff der Kalibriereinrichtung vorteilhaft zu verbessern, jedoch mit dem HD-Polyethylen soweit verträglich sein, daß dessen mechanische Eigenschaften in der Schmelze und im Festzustand nicht oder nur unwesentlich verändert werden.

Erfindungsgemäße Gleitmittel sind Ölsäureamid, Erucasäureamid, Bis-stearoyl-ethylendiamin und die Salze und/oder Ester der technischen Montansäure. Die Ester sind vorzugsweise Ester der technischen Montansäure mit Diolen, welche Tropfpunkte von ca. 70 bis ca. 110°C, Säurezahlen von ca. 6 bis ca. 100 und Verseifungszahlen von ca. 40 bis 160 besitzen.

Alle Gleitmittel können für sich oder als Gemisch eingesetzt werden.

Die eingesetzte Menge an Gleitmittel beträgt 0,01 bis 2, vorzugsweise 0,1 bis 1 Gew.-%, bezogen auf das Polyethylen. Die Menge richtet sich nach der Art des Gleitmittels, sie ist so zu wählen, daß die Herstellung des zu reckenden und zu verstreckenden Rohres nicht beeinträchtigt wird. Das Einbringen des Gleitmittels kann mittels der üblichen Mischaggregate bei der Granulatherstellung aus dem Polymerpulver geschehen.

Aus der gleitmittelhaltigen Formmasse wird zunächst auf einer üblichen Extrusionsanlage ein dickwandiges Rohr hergestellt, welches in einem Temperierbad auf Strecktemperatur gebracht und verstreckt wird. Da das Rohr unter Druck steht, weitet sich das Rohr nach der Längsstreckeinrichtung. Es wird durch die Kalibrierhülse geführt und abgekühlt.

Gleitmittel sind an sich in derartigen Formmassen für Rohre nicht üblich, da die Formmasse bei der Verarbeitung an den Maschinenteilen ausreichend gut gleitet und Gleitmittel die Dauerfestigkeit von Rohren ungünstig beeinflussen können.

Durch die erfindungsgemäße Verwendung einer gleitmittelhaltigen HD-Polyethylen-Formmasse wird jedoch eine störungsfreie Produktion von Kartuschenrohren erreicht.

<u>Vergleichsbeispiel</u>

Aus einer HD-Polyethylen-Formmasse (Dichte 0,943 g/cm³, MFI 590/5 0 4 g/10 min, Viskositätszahl 333 ml/g) wurde auf einer Rohrextrusionsanlage ein Rohr mit einem Durchmesser von 18,7 mm und einer Wandstärke von 5,05 mm hergestellt. Das Rohr wurde durch eine käufliche Rohrverfestigungsanlage geleitet, um verstreckt und gereckt zu werden. Zunächst passierte das Rohr eine 24 m lange Längsstreckeinrichtung, in welcher das Rohr in unmittelbarem Kontakt mit Glykol aufgeheizt wurde (Temperatur 125 bis 130°C), und in welcher es bei einem Innendruck von 2,7 bis 3 bar im Verhältnis 1:5,7 verstreckt wurde. Die Endgeschwindigkeit des Rohres betrug 14 m/min. Unmittelbar nach dem Verlassen der Längsstreckeinrichtung weitete sich das Rohr ohne weitere Wärmezufuhr auf und wurde durch eine Kalibrierhülse mit Riffelung geformt und abgekühlt, wobei ein Querreckverhältnis von ca.

1,5 erreicht wurde. Man erhielt ein Kartuschenrohr des Kalibers 12 mit einem Durchmesser von 20 mm und einer Wandstärke von 0,6 mm. Innerhalb von 10 bis 30 min nach Beginn des Streckvorganges verlor das in die Längsstreckeinrichtung einlaufende Ausgangsrohr an Spannung und hing durch, gleichzeitig wanderte die Einschnürzone an das Ende der Längsstreckeinrichtung. Schließlich riß das Rohr ab. Ursache war die hohe Reibung in der Kalibrierhülse.

Beispiele 1 bis 3

Das Vergleichsbeispiel wurde wiederholt, jedoch wurde jeweils ein HD-Polyethylen eingesetzt, welches 0,3 Gew.-% Ölsäureamid (= Beispiel 1), 0,3 Gew.-% Butandiolester/Calciumsalz der technischen Montansäure (TP = 98–104°C, SZ 10–15, Vz 100–120) (= Beispiel 2) oder 0,3 Gew.-% Erucasäureamid (= Beispiel 3) enthielt.

Die Produktion des Kartuschenrohres verlief über viele Stunden störungsfrei, wobei der Eindruck entstand, daß mit dem Montansäureester und dem Erucasäureamid auf die Dauer die besseren Ergebnisse erzielt würden.

**Patentansprüche für die Vertragsstaaten: DE, FR, IT**

1. Verfahren zur Verminderung der Reibungskräfte bei der Herstellung von Kartuschenrohren, bei welchem man zunächst aus einer HD-Polyethylen-Formmasse, deren Hauptbestandteil ein HD-Polyethylen mit einer Dichte von 0,941 bis 0,945 g/cm³, einer Viskositätszahl von ca. 310 cm³/g und einem Schmelzindex MFI 190/5 von 0,3 bis 0,45 g/10 min und MFI 190/21,6 von 12 bis 18 g/10 min ist, ein Rohr mit einem Durchmesser von 15 bis 25 mm und einer Wandstärke von 1 bis 5 mm extrudiert, das Rohr in einer Längsstreckeinrichtung bei einer Temperatur von 120 bis 135°C im Verhältnis 1:5 bis 1:8 längsverstreckt und sodann mittels einer Kalibrierhülse im Verhältnis 1:1,2 bis 1:1,8 querreckt, mit einer Riffelung versieht und kühlt, dadurch gekennzeichnet, daß man eine HD-Polyethylen-Formmasse verwendet, welche 0,01 bis 2 Gew.-%, bezogen auf das Polyethylen, Ölsäureamid, Erucasäureamid, Bis-stearoyl-ethylendiamin, eines Salzes und/oder eines Esters der technischen Montansäure oder eines Gemisches der vorgenannten Verbindungen enthält.

2. Verwendung einer HD-Polyethylen-Formmasse, deren Hauptbestandteil ein HD-Polyethylen mit einer Dichte von 0,941 bis 0,945 g/cm³, einer Viskositätszahl von ca. 310 cm³/g und einem Schmelz-index MFI 190/5 von 0,3 bis 0,45 g/10 min und MFI 190/21,6 von 12 bis 18 g/10 min ist, welche 0,01 bis 2 Gew.-%, bezogen auf das Polyethylen, Ölsäureamid, Erucasäureamid, Bis-stearoyl-ethylendiamin, eines Salzes und/oder eines Esters der technischen Montansäure oder eines Gemisches der vorgenannten Verbindungen enthält, zur Herstellung von Kartuschenrohren.

**Patentanspruch für den Vertragsstaat: ES**

1. Verfahren zur Verminderung der Reibungskräfte bei der Herstellung von Kartuschenrohren, bei welchem man zunächst aus einer HD-Polyethylen-Formmasse, deren Hauptbestandteil ein HD-Polyethylen mit einer Dichte von 0,941 bis 0,945 g/cm³, einer Viskositätszahl von ca. 310 cm³/g und einem Schmelzindex MFI 190/5 von 0,3 bis 0,45 g/10 min und MFI 190/21,6 von 12 bis 18 g/10 min ist, ein Rohr mit einem Durchmesser von 15 bis 25 mm und einer Wandstärke von 1 bis 5 mm extrudiert, das Rohr in einer Längsstreckeinrichtung bei einer Temperatur von 120 bis 135°C im Verhältnis 1:5 bis 1:8 längsverstreckt und sodann mittels einer Kalibrierhülse im Verhältnis 1:1,2 bis 1:1,8 querreckt, mit einer Riffelung versieht und kühlt, dadurch gekennzeichnet, daß man eine HD-Polyethylen-Formmasse verwendet, welche 0,01 bis 2 Gew.-%, bezogen auf das Polyethylen, Ölsäureamid, Erucasäureamid, Bis-stearoyl-ethylendiamin, eines Salzes und/oder eines Esters der technischen Montansäure oder eines Gemisches der vorgenannten Verbindungen enthält.

**Claims for the Contracting States: DE, FR, IT**

1. A process for reducing the frictional forces in the production of cartridge tubes, wherein a tube having a diameter of 15 to 25 mm and a wall thickness of 1 to 5 mm is first extruded from an HD polyethylene moulding material having a density of 0.941 to 0.945 g/cm³, a viscosity number of about 310 cm³/g and a melt flow index MFI 190/5 of 0,3 to 0,45 g/10 min and MFI 190/21, 6 of 12 to 18 g/10 min, the tube is drawn longitudinally at a ratio of 1:5 to 1:8 in a longitudinal stretching device at a temperature of 120 to 135°C and is then stretched transversely at a ratio of 1:1.2 to 1:1.8 by means of a calibration case, is provided with fluting and is cooled, which comprises using an HD polyethylene moulding material containing 0.01 to 2% by weight, relative to the polyethylene, oleic acid amide, erucamide, bistearoyl ethylene diamine or a salt and/or an ester of technical montanic acid or a mixture of the before-mentioned compounds.

2. The use, for the production of cartridge tubes, of an HD polyethylene moulding material having a density of 0.941 to 0.945 g/cm³, a viscosity number of about 310 cm³/g and a melt flow index MFI 190/5 of 0,3 to 0,45 g/10 min and MFI 190/21,6 of 12 to 18 g/10 min, containing 0,01 to 2% by weight, relative to the polyethylene, oleic acid amide, erucamide, bistearoyl ethylene diamine or a salt and/or an ester of technical montanic acid or a mixture of the before-mentioned compounds.

**Claims for the Contracting State: ES**

1. A process for reducing the frictional forces in the production of cartridge tubes, wherein a tube having a diameter of 15 to 25 mm and a wall thickness of 1 to 5 mm is first extruded from an HD polyethylene moulding material having a density of 0.941 to 0.945 g/cm³, a viscosity number of about 310 cm³/g and a melt flow index MFI 190/5 of 0,3 to 0,45 g/10 min and MFI 190/21,6 of 12 to 18 g/10 min, the tube is drawn longitudinally at a ratio of 1:5 to 1:8 in a longitudinal stretching device at a temperature of 120 to 135°C and is then stretched transversely at a ratio of 1:1.2 to 1:1.8 by means of a calibration case, is provided with fluting and is cooled, which comprises using an HD polyethylene moulding material containing 0.01 to 2% by weight, relative to the polyethylene, oleic acid amide, erucamide, bistearoyl ethylene diamine or a salt and/or an ester of technical montanic acid or a mixture of the before-mentioned compounds.

**Revendications pour les Etats contractants: DE, FR, IT**

1. Procédé pour diminuer les forces de frottement lors de la fabrication de tubes pour cartouches, procédé dans lequel on extrude d'abord, à partir d'un mélange à mouler de polyéthylène HD, dont le constituant principal est un polyéthylène HD ayant une masse volumique de 0,941 à 0,945 g/cm³, une viscosité d'environ 310 ml/g et un indice de fluidité MFI 190/5 de 0,3 à 0,45 g/10 min et un indice de fluidité MFI 190/21,6 de 12 à 18 g/10 min, un tube ayant un diamètre de 15 à 25 mm et une épaisseur de paroi de 1 à 5 mm, on fait subir au tube, dans un équipement d'étirage longitudinal à une température de 120 à 135°C, un étirage longitudinal selon un rapport de 1:5 à 1:8, puis, à l'aide d'un manchon calibré, un étirage transversal selon un rapport de 1:1,2 à 1:1,8, on le garnit d'un striage et on le refroidit, caractérisé en ce qu'on utilise un mélange à mouler de polyéthylène HD contenant de 0,01 à 2% en poids, par rapport au polyéthylène, d'oléamide, d'érucamide, de bis-stéaroyléthylènediamine, d'un sel et/ou d'un ester de l'acide montanique technique, ou d'un mélange des composés mentionnés ci-dessus.

2. Utilisation d'un mélange à mouler de polyéthylène HD, dont le constituant principal est un polyéthylène HD ayant une masse volumique de 0,941 à 0,945 g/cm³, une viscosité d'environ 310 ml/g et un indice de fluidité MFI 190/5 de 0,3 à 0,45 g/10 min et un indice de fluidité MFI 190/21,6 de 12 à 18 g/10 min, qui contient de 0,01 à 2% en poids, par rapport au polyéthylène, d'oléamide, d'érucamide, de bis-stéaroyléthylènediamine, d'un sel et/ou d'un ester de l'acide montanique technique ou d'un mélange des composés ci-dessus, pour la fabrication de tubes pour cartouches.

**Revendication pour l'Etat contractant: ES**

1. Procédé pour diminuer les forces de frottement lors de la fabrication de tubes pour cartouches, procédé dans lequel on extrude d'abord, à partir d'un mélange à mouler de polyéthylène HD, dont le constituant principal est un polyéthylène HD ayant une masse volumique de 0,941 à 0,945 g/cm3, une viscosité d'environ 310 ml/g et un indice de fluidité MFI 190/5 de 0,3 à 0,45 g/10 min et un indice de fluidité MFI 190/21,6 de 12 à 18 g/10 min, un tube ayant un diamètre de 15 à 25 mm et une épaisseur de paroi de 1 à 5 mm, on fait subir au tube, dans un équipement d'étirage longitudinal à une temperature de 120 à 135°C, un étirage longitudinal selon un rapport de 1:5 à 1:8, puis, à l'aide d'un manchon calibre, un étirage transversal selon un rapport de 1:1,2 à 1:1,8, on le garnit d'un striage et on le refroidit, caractérisé en ce qu'on utilise un meélange à mouler de polyéthylène HD contenant de 0,01 à 2% en poids, par rapport au polyethylène, d'oléamide, d'érucamide, de bis-stéaroyléthylènediamine, d'un sel et/ou d'un ester de l'acide montanique technique, ou d'un mélange des composes mentionnés ci-dessus.